(19) Europäisches Patentamt

European Patent Office

Office européen des brevets

(11) **EP 0 524 526 B1**

(12) **EUROPÄISCHE PATENTSCHRIFT**

(45) Veröffentlichungstag und Bekanntmachung des Hinweises auf die Patenterteilung:
**05.03.1997 Patentblatt 1997/10**

(51) Int. Cl.$^6$: **C07F 7/08**, C07F 7/21

(21) Anmeldenummer: **92111991.3**

(22) Anmeldetag: **14.07.1992**

(54) **Verfahren zur Herstellung von Organosiloxanen**

Process for the preparation of organosiloxanes

Procédé de préparation d'organosiloxanes

(84) Benannte Vertragsstaaten:
**DE ES FR GB IT**

(30) Priorität: **26.07.1991 DE 4124802**

(43) Veröffentlichungstag der Anmeldung:
**27.01.1993 Patentblatt 1993/04**

(73) Patentinhaber: **BAYER AG**
**51368 Leverkusen (DE)**

(72) Erfinder:
• **Maass, Günther, Dr.**
**W-5060 Bergisch Gladbach 2 (DE)**
• **Schulze, Manfred, Dr.**
**W-5653 Leichlingen 1 (DE)**

(56) Entgegenhaltungen:
**EP-A- 0 167 924**          **DE-A- 2 521 742**
**DE-A- 3 202 558**          **GB-A- 2 087 915**

**Beschreibung**

Die vorliegende Erfindung betrifft ein Verfahren zur Herstellung von Organosiloxanen, insbesondere solchen mit hohem Anteil an niedermolekularen cyclischen und kettenförmigen Organosiloxanen, bevorzugt cyclischen Dimethylsiloxanen, durch Hydrolyse der entsprechenden Organochlorsilane, wobei gleichzeitig ein hoher Anteil an gasförmigem Chlorwasserstoff anfällt.

Organosiloxane sind wichtige Vorprodukte der Silikonchemie. Die Organosiloxane werden allgemein durch Hydrolyse von Organochlorsilanen gewonnen. Die Hydrolyse erfolgt über die Zwischenstufe der Bildung von Organosilanolen unter Abspaltung von Chlorwasserstoff. Silanolgruppen sind unter sauren Bedingungen sehr reaktiv und gehen Folgereaktionen mit Si-Cl oder SiOH-Gruppen ein. Dabei werden die charteristischen Siloxangruppen (-Si-O-Si-) der Silikone gebildet. Bei Einsatz von Diorganodichlorsilanen werden neben den cyclischen Diorganosiloxanen auch kettenförmige $\alpha,\overline{\omega}$-Dihydroxypolydiorganosiloxane gebildet, die zum Aufbau höhermolekularer Organosiloxane führen. Bei Einsatz von Organotrichlorsilanen werden verzweigte Polyorganosiloxane, bei Einsatz von Triorganomonochlorsilanen werden Hexaorganodisiloxane und bei Einsatz gemischter Silane werden Mischformen der genannten Organosiloxane gebildet.

Aufgrund der hohen Viskosität der höhermolekularen Organosiloxane sind diese jedoch im Hinblick auf die Weiterverarbeitungsschritte, wie Reinigung, Destillation usw. unerwünscht. Es hat daher nicht an Anstrengungen gefehlt, den Anteil niedermolekularer Organosiloxane im Hydrolyseprodukt zu erhöhen.

So gelingt es, durch Zusatz von oberflächenaktiven Substanzen (US-A 3 983 148, US-A 4 412 080, US-A 4 423 240, US-A 4 447 630) den Zyklengehalt im Hydrolysat von Diorganodichlorsilanen auf bis zu 95 % zu erhöhen. Allerdings sind diese Verfahren wegen des damit verbundenen Aufwandes zur anschließenden Entfernung der oberflächenaktiven Substanzen aus dem Siloxangemisch nicht befriedigend, da bereits Verunreinigungen im Bereich von 1 ppm die späteren PolyorganosiloxanEndprodukte abbauen können.

Andere Verfahren zur Herstellung von Organosiloxanen gehen von den Einsatzprodukten Organochlorsilane und Methanol aus, wobei eine Umsetzung zu Organosiloxan und Methylchlorid angestrebt wird (Methanolyse) siehe z.B. GB-A 2 087 915, DE-A 2 521 742. Methylchlorid kann direkt bei der Rochow-Synthese zur Umsetzung mit metallischen Silicium zu Methylchlorsilanen eingesetzt werden. Die Umsetzung von Organochlorsilanen mit Methanol unter Bildung von Organosiloxanen und Methylchlorid erfolgt jedoch vergleichsweise langsam, so daß nur eine unbefriedigende Raum-Zeit-Ausbeute erhalten wird. Die Entwicklung ging hier in Richtung geeigneter Katalysatoren (DE-A 2 557 624) für die Methylchloridbildung. Dennoch blieben die Ausbeuten um einen Faktor 3-4 hinter den Ausbeuten der Hydrolysereaktion zurück, so daß der Vorteil der gleichzeitigen Herstellung von Methylchlorid und Siloxanen nicht wahrgenommen werden konnte. Darüber hinaus entsteht bei der Methanolyse auch immer wäßrige Salzsäure, die entsorgt werden muß.

Primäre Aufgabe der vorliegenden Erfindung ist es, ein Verfahren zur Verfügung zu stellen, bei dem Organosiloxane mit einem Gehalt an niedermolekularen Organosiloxanen von oberhalb 75 Gew.-%, bevorzugt oberhalb 85 Gew.-% erhalten werden, und bei dem ferner die Nachteile des Methanolyseverfahrens vermieden werden.

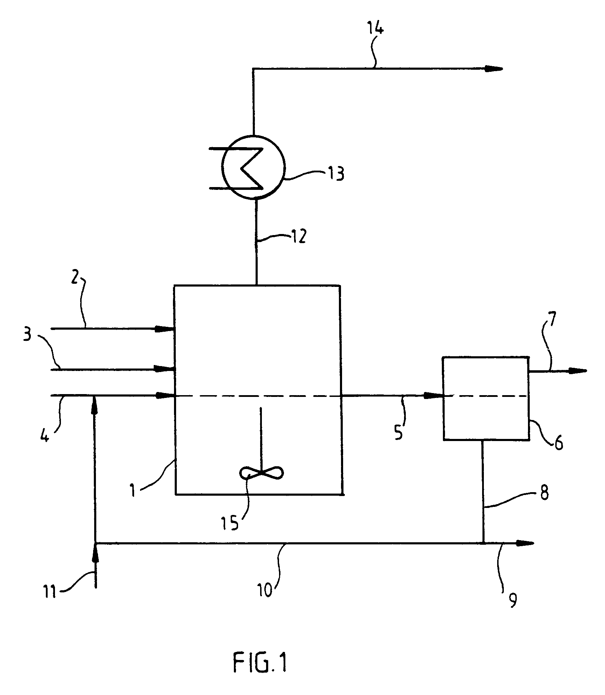

Aus verfahrenstechnischer Sicht gehört das erfindungsgemäße Verfahren zur Klasse der Verfahren, die mit einer Anlage gemäß Fig. 1 durchgeführt werden. Die verfahrenstechnische Ausgestaltung des erfindungsgemäßen Verfahrens wird nachfolgend zunächst anhand Fig.1 erläutert. Danach werden in einen Hydrolysereaktor 1 über eine oder mehrere Leitungen 2, 3, 4 Reagenzien eingeleitet. Im Hydrolysereaktor 1 kann ein Rührer 15 vorgesehen sein, mit dem die Reagenzien vermischt werden. Über eine Leitung 5 wird die Reaktorflüssigkeit einem Phasenseparator 6 zugeführt, in dem sich die aus zwei Phasen unterschiedlicher Dichte bestehende Reaktorflüssigkeit in eine Ober- und eine Unterphase separieren kann. Über eine Leitung 7, die oberhalb der Phasengrenzfläche in dem Phasenseparator 6 mündet, wird das Hydrolysat, die Organosiloxane, entnommen und gegebenenfalls einer Reinigung von noch anhaftenden Resten der im Phasenseparator abgetrennten Unterphase zugeführt. Über Leitung 8 wird aus dem Phasenseparator die Unterphase, die im wesentlichen alle übrigen Bestandteile der Reaktorflüssigkeit mit Ausnahme des Hydrolysats enthält, entnommen. Diese Unterphase kann entweder über Leitung 9 aus dem Verfahren ausgeschleust werden und hier nicht weiter behandelten Aufarbeitungsschritten zugeführt werden oder aber über Leitung 10 in den Hydrolysereaktor zurückgeführt werden. Gasförmige Hydrolyseprodukte werden über Leitung 12 oberhalb des Hydrolysereaktors entnommen und in einem Rückflußkühler 13 von kondensierbaren Bestandteilen befreit, die in den Hydrolysereaktor zurückgeführt werden. Aus dem Rückflußkühler werden über Leitung 14 die von kondensierbaren Bestandteilen befreiten gasförmigen Hydrolyseprodukte einer weiteren Verwertung zugeführt.

Das erfindungsgemäße Verfahren gehört ferner zur Klasse derjenigen Verfahren, bei denen die Umsetzung von Organochlorsilanen zu Organosiloxanen in Gegenwart von Wasser, Methylalkohol und Salzsäure sowie ferner in Abwesenheit von die Zyklenbildung begünstigenden Katalysatoren durchgeführt wird.

Es wurde nun gefunden, daß das Hydrolysat besonders hohe Gehalte an niedermolekularen Organosiloxanen enthält, wenn in der Reaktorflüssigkeit bestimmte Gehalte an Methanol eingehalten werden. In einer allgemeinen Charakterisierung des erfindungsgemäßen Verfahrens ist dieses dadurch gekennzeichnet, daß die im Phasenseparator abgetrennte Unterphase, die im wesentlichen aus Wasser, Salzsäure und Methanol besteht, ein molares Mengenverhältnis von Wasser zu Methanol zwischen 0,3 und 10 aufweist. Vorzugsweise soll das molare Verhältnis oberhalb von 0,6, besonders bevorzugt oberhalb von 0,9, liegen. Die Obergrenze für das molare Verhältnis soll vorzugsweise bei 3, besonders bevorzugt bei 1,8, ganz besonders bevorzugt bei 1,2 liegen.

Insbesondere werden erfindungsgemäß Diorganodichlorsilane eingesetzt, wobei ein hoher Anteil an zyklischen Diorganosiloxanen erhalten werden. Bevorzugtes Diorganodichlorsilan ist das Dimethyldichlorsilan.

Die Erfindung wird im folgenden am Beispiel des Einsatzes von Dimethyldichlorsilan beschrieben. Entsprechendes gilt selbstverständlich auch für die Hydrolyse anderer Organosilane.

Erfindungsgemäß ist demnach die Zuführ von Dimethyldichlorsilan, Wasser und Methanol über Leitungen 2, 3 und 4 der Fig.1 so zu steuern, daß die durch Leitung 8 aus dem Phasenseparator austretende Flüssigkeit das die Erfindung kennzeichnende Verhältnis von Wasser und Methanol aufweist.

Es ist erfindungsggemäß bevorzugt, die mittlere Verweilzeit im Reaktor auf unter 30 Minuten zu begrenzen. Unter mittlerer Verweilzeit soll die stündlich über Leitung 2, 3 und 4 zugeführte Gesamtmenge an Reagenzien geteilt durch das im Hydrolysereaktor befindliche Flüssigkeitsvolumen verstanden werden. Wenn demnach, wie üblich die Auslaßleitung 5 des Hydrolysereaktors als Überlauf ausgebildet ist, liegt der Flüssigkeitsspiegel im Hydrolysereaktor in Höhe der Einmündung der Überlaufleitung 5.

Erfindungsgemäß wird die Temperatur im Hydrolysereaktor zwischen 40 und 90°C gehalten. Temperaturen bis 120°C bieten im Hinblick auf die Ausbeute an cyclischen Organosilxanen keinen Nachteil. Die höheren Temperaturen bis 120° begünstigen allerdings die Bildung von Methylchlorid, das über Leitung 14 gemeinsam mit den nicht kondensierbaren gasförmigen Bestandteilen aus dem Verfahren ausgeschleust wird. Sofern aber das über Leitung 14 ausgeschleuste Gas, das überwiegend aus Chlorwasserstoff besteht, anschließend für die Weiterverwendung bei der Rochow-Synthese zu Methylchlorid umgesetzt werden soll, kann es wünschenswert sein, den Anteil an Methylchlorid an dem gasförmigen Hydrolyseprodukt bereits zu erhöhen, um den anschließend zu betreibenden Reaktor zur Umsetzung von Salzsäure und Methanol zu Methylchlorid zu entlasten. Aus verfahrenstechnischen Gesichtspunkten des Betriebs des Hydrolysereaktors ist jedoch die Anwendung nicht zu hoher Temperaturen zu bevorzugen. Besonders bevorzugt sind Temperaturen zwischen 50 und 80°C, da diese für die Entgasung des Chlorwasserstoffs besonders günstig sind.

Der Gasdruck im Hydrolysereaktor kann bei Normaldruck liegen. Ebenso kann das Verfahren bei leichtem Unterdruck ohne Nachteil betrieben werden. Im allgemeinen ist jedoch ein leichter Überdruck bevorzugt, da dieser die Förderung der gasförmigen Hydrolyseprodukte durch Leitung 14 begünstigt. In großtechnischer Ausführung des erfindungsgemäßen Verfahrens wird vorteilhaft mit einem Überdruck von etwa 1 bar gearbeitet, da mittels dieses Überdrucks die Förderung durch die Leitungen 14 zu nachgeschalteten Aggregaten ohne Einschaltung von Pumpaggregaten begünstigt wird. Zur Reduktion des Gasblasenvolumens in der Hydrolyseflüssigkeit kann ferner eine weitere Druckerhöhung bis 2 bar vorteilhaft sein.

In dem Reaktionsgefäß soll für eine kräftige Durchmischung der flüssigen Phasen gesorgt werden. Als Mischaggregat kommen dem Stand der Verfahrenstechnik entsprechend verschiedene Apparate in Frage wie z.B. ein kräftig rührbarer mit Stromstörem ausgerüsteter Rührkessel, eine Kolonne mit unterschiedlichen Einbauten oder Füllkörpern, ein Statikmischer mit anschließender Beruhigungszone, usw. In jedem Fall muß die Möglichkeit der Phasentrennung nach der Umsetzung sowohl für den Gas-Flüssigkeitsbereich als auch der öligen, wäßrigen und flüssigen Phasen gegeben sein.

Die Steuerung der Temperatur im Hydrolysereaktor kann durch eine externe Heizung mit Regelung erfolgen, wenn die Zufuhr des Dimethyldichlorsilans flüssig etwa bei Raumtemperatur erfolgt. Jedoch ist es ebenso möglich, das Dimethyldichlorsilan nach vorheriger Verdampfung bei erhöhter Temperatur gasförmig im Boden des Hydrolysereaktors einzuführen und auf diese Weise die Temperatursteuerung zu realisieren. Bei gasförmiger Zufuhr des Dimethyldichiorsilans ist dafür Sorge zu tragen, daß dieses in Form von hinreichend kleinen Bläschen in den Hydrolysereaktor eingeführt wird, so daß die Bläschen nicht durch die Oberfläche der Hydrolyseflüssigkeit hindurchtreten und mit den gasförmigen Hydrolyseprodukten aus dem Reaktor ausgeschleust werden. Aus verfahrenstechnischen Gesichtspunkten erscheint es am einfachsten, das Dimethyldichlorsilan in flüssiger Form in den Hydrolysereaktor einzuführen, wobei die Einführung sowohl unterhalb des Flüssigkeitsspiegels als auch im freien Fall durch den Gasraum oberhalb des Flüssigkeitsspiegels erfolgen kann.

Die Reaktionsführung ist auch in der Weise möglich, daß die Reaktionspartner dampfförmig in den Gasraum oberhalb der Hydrolyseflüssigkeit eingeleitet werden, so daß die Hydrolyse im wesentlichen im Gasraum abläuft und die kondensierbaren Hydrolyseprodukte im Rückflußkühler kondensiert und in den Hydrolysereaktor zurückgeführt werden. Diese Reaktionsführung ist energetisch ungünstiger, erlaubt aber höhere Raum-Zeit-Ausbeuten, da eine Entgasung des Flüssigkeitsvolumens im wesentlichen entfällt.

Es wurde ferner gefunden, daß der erfindungsgemäß geforderte Gehalt an Methanol in der Unterphase, die aus dem Phasenreaktor abgezogen wird, dadurch aufrechterhalten werden kann, daß Wasser und Methanol in einer Menge von zusammen mindestens 1 Mol pro Äquivalent direkt an Silicium gebundendem Chlor des zugeführten Organochlorsilans in den Hydrolysereaktor eingeleitet wird und das molare Verhältnis von zugeführtem Wasser und Methanol nach Abzug von 0,5 Mol Wasser pro Äquivalent von direkt an Silicium gebundenem Chlor des Organochlorsilans noch 0,3 bis 10, vorzugsweise 0,9 bis 1,8, beträgt. Der vorliegende experimentielle Befund scheint daraufhin zu deuten, daß im Idealfall erfindungsgemäß ein molares Verhältnis von Wasser zu Methylalkohol nach Abzug von 0,5 Mol Wasser, das bei der Hydrolysereaktion verbraucht wird, von etwa 0,9 bis 1,2 zu optimalen Verhältnissen führt.

Bevorzugt wird erfindungsgemäß die aus dem Phasenseparator austretende Unterphase in den Hydrolysereaktor zumindest teilweise zurückgeführt. Die Zufuhr von frischem Wasser und Methylalkohol kann dann um die zurückgeführten Anteile reduziert werden.

In einem einfachen Rührkesselreaktor erlaubt das erfindungsgemäße Verfahren die Erzielung einer Ausbeute von mindestens etwa 800 g Organosiloxane pro Liter Reaktorvolumen (Flüssigkeitsfüllung) und Stunde. Die Ausbeute an cyclischen Dimethylsiloxanen liegt bei mindestens 560 g pro Liter Reaktorvolumen (Flüssigkeitsfüllung) und Stunde. Es wurden bis zu 2 000 g Organosiloxane pro Liter Reaktorvolumen erhalten.

Der limitierende Faktor bezüglich Raum-Zeit-Ausbeute ist die Abtrennung der gasförmigen Hydrolyseprodukte. Eine Steigerung auf die 2- bis 3fache Raum-Zeit-Ausbeute ist erfindungsgemäß ohne weiteres möglich, wenn Reaktoren eingesetzt werden, die speziell für Entgasungsverfahren eingerichtet sind. Erfindungsgemäß wird wegen des verfahrenstechnisch geringen Aufwandes ein einfacher Rührkesselreaktor mit Emailauskleidung unter Inkaufnahme nicht optimaler Raum-Zeit-Ausbeute bevorzugt.

Das erfindungsgemäße Verfahren erlaubt eine (besonders bevorzugte) Ausführung, bei der im wesentlichen 100 % der aus den Dimethyldichlorsilanen theoretisch zu bildenden Salzsäure in Form eines gasförmigen Hydrolyseproduktes gewonnen werden können. Gemäß dieser besonders bevorzugten Ausführungsform des erfindungsgemäßen Verfahrens werden 100 % der aus dem Phasenseperator gewonnenen Unterphase in den Hydrolysereaktor zurückgeführt und im übrigen im wesentlichen nur noch 0,5 Mol Wasser pro Äquivalent direkt an Silicium gebundenem Chlor des Dimethyldichlorsilans dem Hydrolysereaktor zugeführt. Tatsächlich müssen jedoch geringfügig höhere Mengen Wasser und zusätzlich geringe Mengen an Methanol zugeführt werden, da der ausgeschleuste gasförmige Chlorwasserstoff noch geringe Anteile an Methylchlorid enthält und ferner auch Verluste an Wasser und Methanol aufgrund der Ausschleusung mit dem Hydrolysat ersetzt werden müssen. Erfindungsgemäß besonders bevorzugt ist demnach das Verfahren, bei dem dem Hydrolysereaktor lediglich 0,5-0,55 Mol Wasser pro Äquivalent direkt an Silicium gebundenem Chlor im Organochlorsilan zugeführt werden und die im Phasenseparator gewonnene Unterphase vollständig zurückgeführt wird, wobei ferner lediglich soviel Methanol zugesetzt wird, wie als Methylchlorid und an der Oberphase anhaftendes Methanol aus dem Kreislauf ausgeschleust wird. Erfindungsgemäß besonders bevorzugt werden demnach dem aus Hydrolysereaktor und der Unterphase aus dem Phasenseparator bestehenden Kreislaufverfahren lediglich Organochlorsilan, 0,5-0,55 Mol Wasser pro direkt an Silicium gebundenem Chlor im Organochlorsilan sowie 0,001-0,1 Mol, bevorzugt bis zu 0,05 Mol, Methanol pro direktan Silicium gebundenem Chlor im Organochlorsilan zugeführt.

Erfindungsgemäß ist das Methanol lediglich intermediar an der Hydrolysereaktion beteiligt, ohne selbst Reaktionsprodukte zu bilden. Offensichtlich wirkt Methanol erfindungsgemäß als die Zyklenbildung, bzw. die Bildung niedermolekularer Organolsiloxane begünstigender Katalysator oder als katalytisches Reaktionsmedium.

Dieses erfindungsgemäß bevorzugte Verfahren, das erlaubt, mindestens 75 % der theoretischen Ausbeute aus dem Organochlorsilan als gasförmigen Chlorwasserstoff zu gewinnen, erlaubt gleichzeitig die Erhöhung der Ausbeute an Organosiloxanen auf etwa 1 200 bis 2 000 g/l Reaktorvolumen (Flüssigkeitsfüllung) und Stunde. Die Ausbeute an cyclischen Dimethylsiloxanen liegt bei mindestens 950 g pro Liter Reaktorvolumen (Flüssigkeitsfüllung) und Stunde. Der oben beschriebene stationäre Zustand des erfindungsgemäßen Verfahrens kann beim Anfahren dadurch erreicht werden, daß eine Flüssigkeitsvorlage im Hydrolysereaktor, die aus 3 Teilen Wasser und 1 Teil Methanol (molar) besteht und danach die oben genannten engen Verhältnisse an Organochlorsilan, Wasser und Methanol zugeführt werden und zwar in einer Menge, daß die mittlere Verweilzeit wie oben definiert zwischen etwa 5 Minuten und 30 Minuten liegt.

Bis zur Einstellung des Gleichgewichts ist dabei gegebenenfalls anfänglich aufgrund der Analyse der Unterphase die aus dem Phasenseparator austritt, die Methanolzugabe abweichend zu regeln, um schneller den Gleichgewichtszustand für die kontinuierliche Verfahrensführung zu erreichen.

Bei Langzeitversuchen entsprechend der erfindungsgemäß besonders bevorzugten Ausführungsform des Verfahrens wurden keine störenden Einflüsse von gegebenenfalls sich bildenden Nebenprodukten gefunden. Neben untergeordneten Anteilen von Methylchlorid im gasförmigen Hydrolyseprodukt wurden insbesondere keine störenden Anteile an Dimethylether gefunden. Vermutlich ist dies auf die vergleichsweise hohe HCl-Konzentration im Hydrolysereaktor zurückzuführen.

Das dem Verfahren zuzuführende Wasser kann auch in Form wäßriger Salzsäure zugeführt werden. Zum Beispiel kann eine unterhalb der azeotropen Zusammensetzung konzentrierte Salzsäure, die zur Waschung des gewonnenen Hydrolysates zur Entfernung von anhaftenden Bestandteilen der Unterphase des Phasenseparators eingesetzt wurde, und die ohnehin Bestandteile aus dem Hydrolysereaktor enthält, vorteilhaft zur Zuführung des für die Hydrolyse notwendigen Wassers eingesetzt werden. Die damit dem Hydrolysereaktor zusätzlich zugeführte Salzsäure kann dann zusätzlich in Form von gasförmigem Chlorwasserstoff gewonnen werden. Auf diese Weise gelingt es, sogar bis zu 120 % der theroretisch aus dem eingesetzten Organohalogensilan gewinnbaren Salzsäure in Form gasförmigen Chlorwasserstoff über Leitung 14 der Fig.1 aus dem Verfahren auszuschleusen, d.h. wäßrige Salzsäure zu entwässern und entsprechend gasförmigen Chlorwasserstoff zu gewinnen.

Unter Berücksichtigung der erfindungsgemäß bevorzugt zu erreichenden hohen Raum-Zeit-Ausbeute mit etwa 80 %igen Anteil an cyclischen Dimethylsiloxanen unter quantitativer Rückführung der Unterphase aus dem Phasenseparator bei quantitativer Rückgewinnung des Chlors in Form von gasförmigem Chlorwasserstoff scheinen die Bestrebungen der Technik, die die Bildung von Zyklen begünstigende Methanolyse in Richtung auf die gleichzeitige Gewinnung von Methylchlorid in nur einem Reaktor zu entwickeln, als eine Entwicklungsrichtung, die das Auffinden des katalytischen Effektes von Methanol bei der Hydrolyse behindert hat. Die Methanolyse von Organochlorsilanen unter Bildung von Methylchlorid als solche ist ein wasserfreisetzendes Verfahren, bei dem zwangsläufig wäßrige Salzsäure anfällt, die nicht ohne weiteres einer sinnvollen Verwendung zugeführt werden kann. Erst die Erkenntnis, daß es unter bestimmten Bedingungen gelingt, die Hydrolysereaktion in Gegenwart von Methanol vorteilhaft durchzuführen ohne auf Produkte mit dem Methanol abzustellen, führte zur Abkehr von diesem Entwicklungsziel der Technik.

Die Erfindung wird anhand der nachfolgenden Beispiele näher erläutert, ohne das hierdurch deren Allgemeinheit eingeschränkt werden soll.

Beispiel 1-5

Als Reaktorgefäß dient ein 2-Liter Vierhalskolben, der mit zwei hintereinandergeschalteten Intensiv-Rückflußkühlern, einem Glasrührer, einem Kontaktthermometer und einem kurzen Einleitungsrohr mit zwei Zuführungen ausgerüstet ist. In halber Höhe des Kolben führt ein Überlaufrohr (Flüssigkeitsvolumen 1 Liter) über eine Flüssigkeitsabtauchung zu einer 0,5-1 großen waagerecht liegenden Trennflasche mit je einem Auslauf für die untere und die obere Phase. Das Kontaktthermometer ist über ein Relais mit einem Heizpilz verbunden, der die untere Hälfte des Kolbens umfaßt. Die wassergekühlten Intensiv-Rückflußkühler sind über ein Gasableitungsrohr mit einem 2-Liter Zweihalskolben verbunden, auf dessen zweitem Stutzen eine 80 cm lange gefüllte Füllkörperkolonne von 3 cm Durchmesser sitzt. Die Füllkörperkolonne wird zum Adsorbieren des entstehenden Gases werden oben mit Wasser berieselt. Das Wasser kann am Bodenauslauf des 1-Liter-Kolbens über eine Flüssigkeitstauchung in ein Vorratsgefäß fließen. Art und Menge des entstehenden Gases wird also in wäßriger Phase bestimmt. Das obere Ende der Kolonne ist aus Sicherheitsgründen über einen Schlauch mit zwei Sicherheitswaschflaschen belüftet. Die beiden Zuführungen an dem kurzen Einleitungsrohr des Reaktionsgefäßes sind mit je einer Labordosierpumpe über Teflonschläuche verbunden. Die Saugseite der Pumpen ist über einen Teflonschlauch mit Einsaugrohr an je ein Vorratsgefäß für Dimethyldichlorsilan bzw. Salzsäure/Methanol/Wasser-Mischungen angeschlossen.

Zunächst wurde der Reaktor mit der in Tabelle 1 angegebenen Methanol/Wasser bzw. Methanol/Salzsäure/Wasser-Mischung gefüllt. Danach wurde die Mischung und Dimethyldichlorsilan in den in Tabelle 1 angegebenen Mengen dosiert. Die Temperatur wurde, wie in Tabelle 1 angegeben, konstant gehalten. Nach etwa 2 Stunden hatte sich ein Gleichgewicht eingestellt.

Die Oberphase wurde beim Austreten sofort mit Wasser gewaschen und anschließend mit 2 %iger Natronlauge gemischt. Nach Abtrennung der Natronlauge wurde die in Tabelle 2 angegebene Viskosität des Silikonöls bestimmt. In der vorletzten Spalte von Tabelle 2 ist die Ausbeute an cyclischen Dimethylsiloxanen (N = 3-8) in g/h und pro Liter Reaktorvolumen (Flüssigkeitsfüllung) sowie die prozentuale Ausbeute an insgesamt erhaltenem Silikonöl angegeben. Ferner sind die Analysen der gasförmigen Produktströme, der Unterphase und der Salzsäuregehalte der Oberphase sowohl in g/h (obere Ziffer) als auch in Mol/h (untere Ziffer angegeben).

Tabelle 1

| Bsp. Nr. | zum Reaktor $Me_2SiCl_2$ | $H_2O$ | MeOH | HCl | T °C | t min l/kg |
|---|---|---|---|---|---|---|
| 1 | 1370 | 737 | 872 | --- | | |
| | 10,6 | 40,9 | 27,2 | --- | 90 | 20,1 |
| 2 | 1369 | 742 | 889 | 297 | | |
| | 10,6 | 41,2 | 27,8 | 8,1 | 63 | 18,2 |
| 3 | 2602 | 565 | 361 | 188 | | |
| | 20,2 | 31,4 | 11,3 | 5,2 | 55 | 16,1 |
| 4 | 2025 | 432 | 300 | 253 | | |
| | 15,7 | 24 | 9,4 | 6,9 | 60 | 19,8 |
| 5 | 1417 | 298 | 174 | 268 | | |
| | 11 | 16,5 | 5,4 | 7,3 | 65 | 27,8 |

Tabelle 2

| Bsp. Nr. | Gas | | Unterphase | | | Oberphase | | | Ausbeute-(Me$_2$SiO)$_n$ g/h . l | Viskosität Siliconöl mPa.s |
|---|---|---|---|---|---|---|---|---|---|---|
| | HCl | MeCl | HCl | MeOH | H$_2$O | ges. | HCl | (Me$_2$SiO)$_n$ | | |
| 1 | 201 | 24 | 528 | 848 | 566 | 774,7 | 24,8 | 565 | 565 | 8,2 |
| | 5,5 | 0,5 | 14,5 | 26,5 | 31,4 | | 0,68 | 7,6 | 73% | |
| 2 | 290 | 2,7 | 749 | 883 | 541 | 824 | 28,8 | 640 | 640 | 6,4 |
| | 7,9 | 0,05 | 20,5 | 27,6 | 30 | | 0,8 | 8,6 | 80,5% | |
| 3 | 1282 | 43 | 283 | 328 | 171 | 1597 | 67 | 1348 | 1348 | 5,9 |
| | 35 | 0,85 | 7,8 | 10,2 | 9,5 | | 1,8 | 18,2 | 88,1% | |
| 4 | 1100 | 37,3 | 227 | 275,2 | 145 | 1197 | 42 | 960 | 960 | 6,1 |
| | 30,2 | 0,74 | 6,2 | 8,6 | 8,1 | | 1,15 | 12,9 | 83,1% | |
| 5 | 864 | 49,5 | 131 | 141 | 100 | 843 | 35,4 | 660 | 660 | 6,6 |
| | 23,7 | 0,98 | 3,6 | 4,4 | 5,5 | | 0,97 | 8,9 | 81.8% | |

Beispiel 6

Es wurde dieselbe Apparatur benutzt, wie in den Beispielen 1-5, wobei jedoch die aus der Trennflasche austretende Unterphase direkt in den Reaktor zurückgeführt wurde. Zum Anfahren des Reaktors wurde eine Mischung aus 300 g Methanol, 300 g HCl und 300 g H$_2$O vorgelegt. Danach wurden kontinuierlich pro Stunde 2 220 g Dimethyldichlorsilan (17 Mol), 310g Wasser (17,2 Mol) und im Mittel 27 g Methanol (0,85 Mol) zugeführt. Die Reaktortemperatur wurde bei 58°C gehalten. Nach 2 Stunden hatten sich konstante Verhältnisse eingestellt.

Als Oberphase wurden stündlich 1 300 g Flüssigkeit abgetrennt. Sie enthielten 45 g Salzsäure und 1 250 g Silikone mit eine Viskosität von 6,0 mPa.s. Der Gehalt an cyclischen Silikonen betrug 84,5 %. Die Gasphase enthielt 1 665 g HCl-Gas (32 Mol) entsprechend 94 % der theroretisch aus dem Dimethyldichlorsilan gewinnbaren Salzsäure, sowie ferner 40 g Methylchlorid. Die Reaktion wurde nach 10 Tagen konitnuierlicher Fahrweise abgebrochen ohne daß negative Effekte auftraten.

Beispiel 7

Es wurde wie in Beispiel 6 verfahren, wobei anstelle des Wassers 390 g 20 %ige Salzsäure aus der Wasche des Silikonproduktes zugeführt wurde. Bei im wesentlichen sonst unveränderten Produktdaten wurde eine Gasphase gewonnen, die 1 245 g HCl-Gas (34 Mol) enthielt.

**Patentansprüche**

1. Verfahren zur Herstellung von Organosiloxanen und Chlorwasserstoff durch Hydrolyse von Organochlorsilanen in einem Hydrolysereaktor und Abtrennung des Produkt-Organosiloxans von der Hydrolyseflüssigkeit durch Phasenseparation, dadurch gekennzeichnet, daß die Hydrolyse bei einem stöchiometrischen Überschuß anWasser und in Gegenwart von Methanol durchgeführt wird, wobei die im Phasenseparator vom Produkt-Organosiloxan abgetrennte wäßrige Phase ein molares Verhältnis von Wasser zu Methanol von 0,3 bis 10 aufweist.

2. Verfahren nach Anspruch 1, dadurch gekennzeichnet, daß die dem Phasenseparator vom Produkt-Organosiloxan abgetrennte wäßrige Phase ein molares Verhältnis von Wasser zu Methanol von 0,6 bis 3 aufweist.

3. Verfahren nach Anspruch 1, dadurch gekennzeichnet, daß dem Hydrolysereaktor Organochlorsilan, Wasser und Methylalkohol zugeführt werden, wobei das molare Verhältnis von zugeführtem Wasser und Methylalkohol in der

EP 0 524 526 B1

Reaktionsmischung nach Abzug von 0,5 Mol Wasser pro Äquivalent an Si-gebundendem Chlor im zugeführten Organochlorsilan noch zwischen 0,3 und 10 liegt.

4. Verfahren nach einem der Ansprüche 1 bis 3, dadurch gekennzeichnet, daß Wasser und Methylalkohol in einer Menge von zusammen mindestens 1 Mol pro Äquivalent direkt an Silicium gebundenem Chlor im zugeführtem Organochlorsilan zugeführt werden.

5. Verfahren nach einem der Ansprüche 1 bis 4, dadurch gekennzeichnet, daß Wasser und Methylalkohol in einer Menge von zusammen nicht mehr als 1,15 Mol pro Äquivalent direkt am Silicium gebundenem Chlor im zugeführten Organosilan zugeführt werden.

6. Verfahren nach einem der Ansprüche 1 bis 5, dadurch gekennzeichnet, daß die Unterphase aus der Abtennung des Produkt-Organosiloxan in den Hydrolysereaktor zurückgeführt wird.

7. Verfahren nach Anspruch 6, dadurch gekennzeichnet, daß zusätzlich zu der zurückgeführten Unterphase 0,5-0,55 Mol Wasser und 0,001-0,1 Mol Methylalkohol pro Äquivalent direkt an Silicium gebundenem Chlor im Organochlorsilan zugeführt werden.

8. Verfahren nach Anspruch 7, dadurch gekennzeichnet, daß das Wasser in Form von wäßriger Salzsäure zugeführt wird.

9. Verfahren nach einem der Ansprüche 1 bis 8, dadurch gekennzeichnet, daß die mittlere Verweilzeit im Hydrolysereaktor zwischen 5 und 30 Minuten beträgt.

**Claims**

1. A process for the preparation of organosiloxanes and hydrogen chloride by hydrolysis of organochlorosilanes in a hydrolysis reactor and separation of the organosiloxane product from the hydrolysis liquid by phase separation, characterised in that the hydrolysis is carried out using a stoichiometric excess of water and in the presence of methanol, the aqueous phase separated in the phase separator from the organosiloxane product having a molar ratio of water to methanol of from 0.3 to 10.

2. The process according to claim 1, characterised in that the aqueous phase separated from the organosiloxane product in the phase separator has a molar ratio of water to methanol of from 0.6 to 3.

3. The process according to claim 1, characterised in that organochlorosilane, water and methyl alcohol are supplied to the hydrolysis reactor, the molar ratio of the water and methyl alcohol supplied still being between 0.3 and 10 in the reaction mixture after the removal of 0.5 mol of water per equivalent of chlorine bonded to silicon in the organochlorosilane introduced.

4. The process according to one of claims 1 to 3, characterised in that water and methyl alcohol are supplied in a total combined quantity of at least 1 mol per equivalent of chlorine directly bonded to silicon in the organochlorosilane introduced.

5. The process according to one of claims 1 to 4, characterised in that water and methyl alcohol are supplied in a total combined quantity of not more than 1.15 mol per equivalent of chlorine directly bonded to silicon in the organosilane introduced.

6. The process according to one of claims 1 to 5, characterised in that the lower phase from the separation of the organosiloxane product is returned to the hydrolysis reactor.

7. The process according to claim 6, characterised in that in addition to the returned lower phase, from 0.5 to 0.55 mol of water and from 0.001 to 0.1 mol of methyl alcohol are supplied per equivalent of chlorine directly bonded to silicon in the organochlorosilane.

8. The process according to claim 7, characterised in that the water is supplied in the form of aqueous hydrochloric acid.

9. The process according to one of claims 1 to 8, characterised in that the average residence time in the hydrolysis reactor is between 5 and 30 minutes.

**Revendications**

1. Procédé de préparation d'organosiloxanes et de chlorure d'hydrogène par hydrolyse d'organochlorosilanes dans un réacteur d'hydrolyse et séparation de l'oganosiloxane formé à partir du liquide d'hydrolyse par séparation de phases, caractérisé en ce que l'hydrolyse est réalisée avec un excès d'eau par rapport à la quantité stoechiométrique et en présence de méthanol, la phase aqueuse séparée au séparateur de phases de l'organosiloxane formé présentant un rapport molaire eau/méthanol de 0,3 à 10.

2. Procédé selon la revendication 1, caractérisé en ce que la phase aqueuse séparée au séparateur de phases de l'organosiloxane formé présente un rapport molaire eau/méthanol de 0,6 à 3.

3. Procédé selon la revendication 1, caractérisé en ce que l'on envoie au réacteur d'hydrolyse l'organochlorosilane, l'eau et l'alcool méthylique, le rapport molaire entre l'eau et l'alcool méthylique introduits dans le mélange de réaction, après soustraction de 0,5 mol d'eau par équivalent de chlore fixé sur le silicium dans l'organochlorosilane introduit, étant encore de 0,3 à 10.

4. Procédé selon une des revendications 1 à 3, caractérisé en ce que l'on envoie l'eau et l'alcool méthylique en quantité totale d'au moins 1 mol par équivalent de chlore fixé directement sur le silicium dans l'organochlorosilane introduit.

5. Procédé selon une des revendications 1 à 4, caractérisé en ce que l'eau et l'alcool méthylique sont introduits en quantité totale ne dépassant pas 1,15 mol par équivalent de chlore fixé directement sur le silicium dans l'organosilane introduit.

6. procédé selon une des revendications 1 à 5, caractérisé en ce que, après séparation de l'organosiloxane formé, la phase inférieure est recyclée au réacteur d'hydrolyse.

7. Procédé selon la revendication 6, caractérisé en ce que, en plus de la phase inférieure recyclée, on introduit 0,5 à 0,55 mol d'eau et 0,001 à 0,1 mol d'alcool méthylique par équivalent de chlore fixé directement sur le silicium dans l'organochlorosilane.

8. Procédé selon la revendication 7, caractérisé en ce que l'eau est introduite sous la forme d'acide chlorhydrique aqueux.

9. Procédé selon l'une des revendications 1 à 8, caractérisé en ce que la durée de passage moyenne dans le réacteur d'hydrolyse est de 5 à 30 min.

EP 0 524 526 B1

FIG.1

9